# FASCICULE DE BREVET EUROPEEN

(11) **EP 0 629 565 B1**
(45) Date de publication et mention de la délivrance du brevet: **26.11.1997**
(21) Numéro de dépôt: 94401250.9
(22) Date de dépôt: 07.06.1994
(51) Int. Cl.: B65G 13/12

(54) **Table télescopique à rouleaux de manutention**
Telekopierbarer Tisch mit Rollenförderer
Telescopic table with roller conveyor

(30) Priorité: 15.06.1993 FR 9307166
(43) Date de publication de la demande: 21.12.1994
(73) Titulaire: Garralon, Pierre, F-95690 NESLES LA VALLEE (FR); Garralon, Jean, F-95320 SAINT-LEU-LA-FORET (FR)
(72) Inventeur: Garralon, Pierre, F-95690 NESLES LA VALLEE (FR); Garralon, Jean, F-95320 SAINT-LEU-LA-FORET (FR)
(74) Mandataire: Lhuillier, René

(56) Documents cités:
- DE-C- 4 023 585
- US-A- 2 613 788
- US-A- 3 780 843
- US-A- 4 640 404

## Description

L'invention qui se situe dans le domaine technique de la manutention de colis ou de charges à l'aide de convoyeurs, concerne plus précisément une table télescopique à rouleaux.

Pour faciliter le déchargement des colis, par exemple d'un camion ou d'un wagon, et les transférer sur un transporteur, il est avantageux de disposer dans certains cas d'une table de transfert qui soit télescopique et dont l'extrémité déployable puisse pénétrer dans une zone d'accès difficile. Il existe un grand nombre de dispositifs qui assurent plus ou moins bien cette fonction. Par exemple il existe des bandes transporteuses dont une partie du châssis support est en surplomb par rapport au reste et peut aussi pénétrer dans un camion. Mais pour assurer le déplacement de la bande, dans les deux sens, il faut une motorisation, ce qui en augmente le coût et rend l'appareil peu pratique. On lui préfère donc un transporteur à rouleaux non mécanisés, faciles d'entretien et qui permet un déplacement aisé des colis dans les deux sens, par une simple poussée de l'utilisateur.

On connait un système de transporteur télescopique à rouleaux qui consiste à fixer des rouleaux sur deux chaînes faisant retour sur deux roues montées à l'extrémité d'une antenne télescopique. Quand celle-ci se déploie à partir d'une table fixe, on obtient un chemin de rouleaux en surplomb, d'une longueur supérieure à celle de la table. L'inconvénient de ce type de transporteur à un seul élément télescopique est qu'il n'autorise qu'un allongement limité au double de la longueur initiale de la table, ce qui le rend inutilisable dans bien des installations.

Pour obtenir un allongement supérieur, on a réalisé des transporteurs à éléments flexibles et extensibles dans lesquels des rouleaux ou galets sont fixés à une charpente légère formée de parallèlogrammes déformables. L'étirement de ces parallélogrammes permet d'allonger le transporteur. Encore faut-il que des pieds supports montés sur roulettes soient prévus à intervalles réguliers. Il n'y a donc aucune partie du transporteur en surplomb ce qui exclut son emploi pour le déchargement d'un camion.

On connaît également des systèmes télescopiques à rouleaux constitués de un ou plusieurs éléments qui se déploient les uns sous les autres mais qui -une fois déployés- ne sont pas au même niveau. De ce fait les colis ne peuvent être déplacés que dans un sens -ne pouvant franchir en montant la marche qui subsiste entre deux éléments.

On connaît aussi notamment par le DE-C 4 023 585, un transporteur télescopique à rouleaux avec un élément fixe et deux éléments déployables, et dont les rouleaux se développent dans le même plan horizontal, sans rupture de pente. Mais les systèmes mécaniques mis en oeuvre sont compliqués et nécessitent d'équiper chaque élément déployable de roues porteuses. L'invention propose un système simple à mettre en oeuvre et à utiliser, qui évite notamment cet inconvénient, en autorisant un surplomb important sans l'usage de roues porteuses.

Un objet principal de la présente invention consiste donc en une table télescopique à rouleaux de manutention comportant un bâti-support fixe supporté par des pieds, un élément intermédiaire déployable dont les longerons se déplacent de façon télescopique dans le bâti fixe et un premier élément déployable dont les longerons sur lesquels sont fixés directement des rouleaux, se déplacent de façon télescopique dans l'élément intermédiaire déployable, ledit premier élément déployable entraînant dans son mouvement les rouleaux de l'élément précédent qui se place sur la table dans un même plan horizontal, lesdits rouleaux étant extraits d'une zone de stockage disposée sous la table fixe, grâce à au moins une chaîne d'entraînement, table télescopique selon laquelle l'élément intermédiaire déployable est déplaçable entre deux barres en forme de U du bâti-support qui sont formées de deux parties superposées dont la barre supérieure renferme une première chaîne d'entraînement dont les axes des galets de guidage portent des rouleaux, selon laquelle le premier élément déployable est déplaçable entre deux barres en forme de U de l'élément intermédiaire qui sont formées de deux parties superposées dont la partie supérieure renferme une autre chaîne d'entraînement dont les axes des galets de guidage portent des rouleaux et selon laquelle les éléments déployables sont équipés d'un système de blocage de la sortie d'un élément déployable et d'un système de butée de la rentrée d'un élément déployable.

Selon une caractéristique particulière de l'invention, le bâti-support fixe est pourvu sur ses deux faces latérales internes, de goulottes venant dans le prolongement des barres et aboutissant à une zone de stockage pour la chaîne et les rouleaux qu'elle porte.

Le dernier maillon intérieur de la chaîne est relié au premier maillon extérieur de l'autre chaîne par une entretoise, ledit premier maillon étant fixé rigidement à l'extrémité du longeron.

Selon une disposition avantageuse de l'invention, des rouleaux de réaction sont fixés de place en place extérieurement à la barre inférieure de l'élément intermédiaire et se déplacent à l'intérieur de la barre inférieure du bâti-support. De même des rouleaux de réaction sont fixés de place en place extérieurement au longeron du premier élément et se déplacent à l'intérieur de la barre inférieure de l'élément intermédiaire.

Selon une autre caractéristique particulière de l'invention, le système de blocage de l'élément intermédiaire lors de la première phase de sortie du premier élément est constitué d'un basculeur profilé porté par l'extrémité d'une barre inférieure de l'élément intermédiaire, qui coopère avec une traverse fixe solidaire du bâti-support. Avantageusement le basculeur est une plaque découpée en forme de V dont la partie inférieure forme une dent, plaque qui pivote sur un axe boulonné sur l'extrémité de la barre inférieure, ledit basculeur débordant dans ladite barre et pouvant être basculé par un rouleau de réaction pour être déverrouillé de la traverse.

Selon encore une autre caractéristique avantageuse de l'invention, le système de butée interdisant la rentrée du premier élément à l'intérieur de l'élément intermédiaire est constitué d'un poussoir escamotable porté par ledit premier élément, qui coopère avec un fer plat solidaire de l'élément intermédiaire. Une extrémité du poussoir escamotable porte un galet de roulement et une butée transversale, et la traverse solidaire du bâti-support porte une rampe servant au basculement du poussoir escamotable grâce à son galet de roulement.

Les caractéristiques particulières et avantages de l'invention seront mieux perçus à la lecture de la description qui va suivre d'un exemple non limitatif de réalisation dans lequel il sera fait référence aux dessins annexés qui représentent.
Figures 1 et 2 des vues générales en perspective, respectivement en position fermée et en position déployée de la table à rouleaux
Figures 3 et 7 des vues en coupe transversale partielle de la table
Figure 4, une vue générale en élévation de la table
Figure 5, une vue partielle en plan du raccordement des chaînes de l'élément intermédiaire et du bâti fixe
Figure 6, une vue à plus grande échelle du basculeur du système de blocage
Figure 8, une vue partielle en élévation d'une extrémité de la table
Figure 9 et 10, des vues respectivement en élévation et en plan du poussoir escamotable
Figure 11, une vue partielle en élévation d'une extrémité de la table montrant le poussoir escamotable.

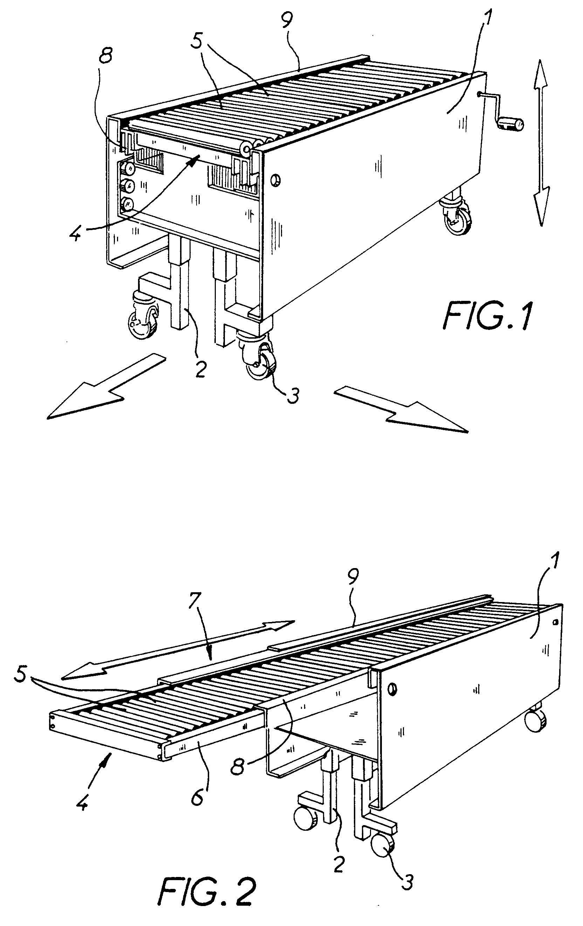

On a représenté aux figures 1 et 2 une table télescopique dont un bâti-support 1 est supporté par des pieds en appui sur des roulettes 3 montées folles autour d'un axe vertical. Chaque pied est constitué de deux tubes emboîtables permettant, à l'aide d'un vérin non visible de lever ou d'abaisser tout ou partie du châssis par rapport au sol et de conférer à la table toute inclinaison voulue. La table peut ainsi se déplacer dans tous les sens matérialisés par les flèches. En variante on peut utiliser un ou plusieurs vérins hydrauliques qui seraient commandés à distance par une ou plusieurs pompes.

Le premier élément 4 à se déployer est constitué de deux longerons 6 sur lesquels sont fixés directement une première série de rouleaux 5. Ces longerons 6 sont déplaçables entre deux barres 8 en forme de U qui font partie d'un second élément à se déployer ou élément intermédiaire déployable 7, également équipé de rouleaux 5. Ledit élément intermédiaire 7 se déplace lui-même entre deux barres 9 en forme de U disposées latéralement au bâti-support 1 de la table télescopique.

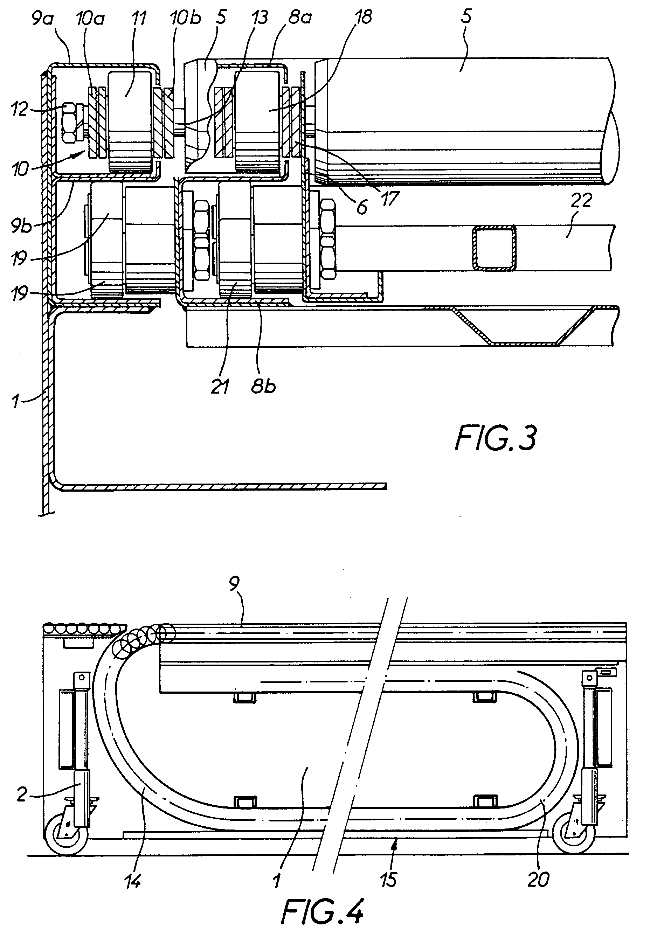

On voit plus précisément à la figure 3 que chaque barre 9 dispose de deux parties superposées 9a et 9b en forme de U, ouvertes en direction de la partie centrale de la table. Les deux sont fixées sur le bâti-support 1. A l'intérieur de la barre supérieure 9a se déplace une chaîne 10 connue en soi du type à axes creux dont chaque extrémité des maillons encadrent un galet 11 qui roule dans ladite barre. Les maillons extérieurs 10a (à gauche sur la figure 3) sont bloqués en bout d'axe de pivotement et de roulement des galets par des boulons 12. Par contre à proximité des maillons intérieurs 10b (à droite sur la figure 3), et sur le même axe 13 que celui des galets 11 sont montés des rouleaux 5 qui sont donc concentriques aux galets de la chaîne d'entraînement. Dans une variante non représentée, on utilise des maillons en matière légère, par exemple en matière plastique, plus propices au glissement. Dans ce cas les rouleaux sont concentriques aux axes 13 d'articulation des maillons de chaîne.

En se référant à la figure 4, on voit que le bâti-support fixe 1 est pourvu sur ses deux faces latérales internes de goulottes 14 orientées vers le centre de la table et venant dans le prolongement des barres 9, grâce auxquelles la chaîne 10, et les rouleaux 5 qu'elle porte peut faire retour dans une zone de stockage 15 se prolongeant elle-même par une courbe 20 ramenant les premiers rouleaux sous la table elle-même.

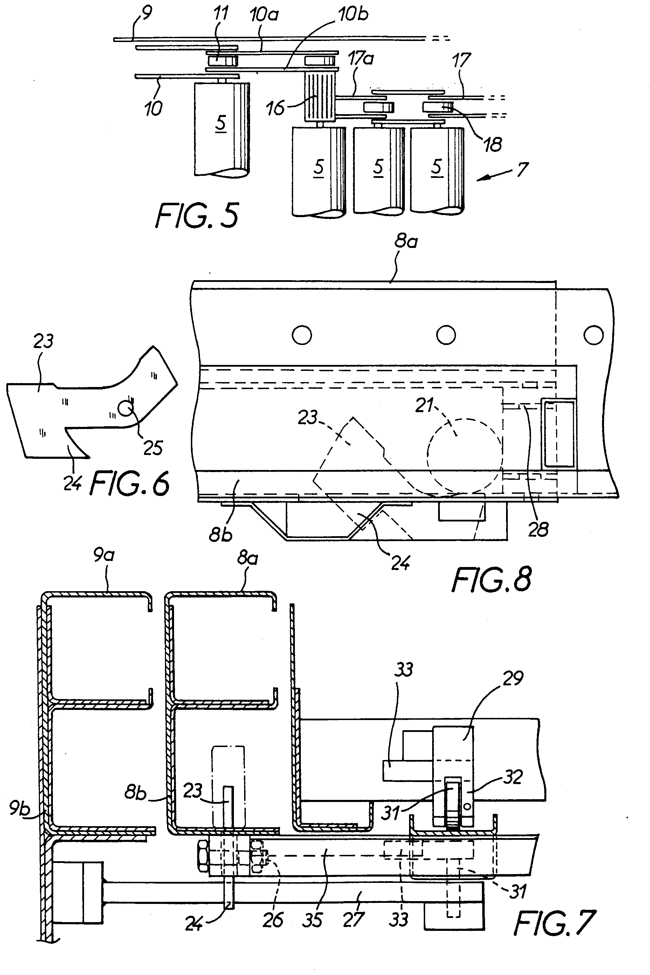

La figure 5 illustre -en plan- la jonction entre la chaîne 10 -dont le déplacement a lieu dans les barres 9 et la zone de stockage- et l'élément intermédiaire 7. Le dernier maillon intérieur 10b est à cet effet pourvu d'une entretoise 16 grâce auquel la chaîne 10 est reliée au maillon extérieur 17a d'une autre chaîne 17 -de conception identique à la précédente- qui peut se déplacer dans les barres 8 dudit élément intermédiaire. On voit clairement à la figure 3 que chaque barre 8, à l'image de la barre 9 précédemment décrite comporte deux parties superposées 8a et 8b. La chaîne 17 -de conception analogue à la chaîne 10- circule donc dans la barre supérieure 8a à l'aide de galets 18 montés sur les axes d'articulation des maillons de chaîne. Comme précédemment chaque axe des galets 18 porte un rouleau 5, les rouleaux successifs étant donc concentriques aux galets de la chaîne 17. En se référent à la figure 5 on notera que le premier maillon de la chaîne 17 solidaire de l'entretoise 16 précitée est fixé rigidement à l'extrémité du longeron faisant partie du premier élément déployable. Ainsi le déplacement des barres 8 de l'élément intermédiaire est-il asservi au déplacement de la chaîne 10 dans le bâti fixe 1. Pour que la barre 8 puisse se déplacer, il faut évidemment qu'elle soit guidée. Pour cela, extérieurement à la barre 8b, sont fixés de place en place une série de rouleaux de réaction 19 dont il apparaît à la figure 3 que alternativement ils sont en appui sur la face supérieure et sur la face inférieure de la barre inférieure 9b fixe évoquée plus haut, et dont le rôle apparaît maintenant. L'élément intermédiaire 7 est donc apte à coulisser dans la table fixe et à se déployer à l'extérieur de cette dernière. Un chevauchement restant bien entendu nécessaire (par exemple d'au moins l'espacement de deux rouleaux de réaction) pour éviter son basculement en fin de course.

On en vient maintenant au premier élément déployable 4 sur les longerons 6 duquel sont fixés directement à intervalles réguliers les rouleaux 5. A la base dudit longeron 6, sont fixés extérieurement une série de rouleaux de réaction 21, analogues aux rouleaux 19 et également décalés, rouleaux qui circulent à l'intérieur de la barre inférieure 8b. Le premier élément 4 peut ainsi coulisser dans l'élément intermédiaire 7.

Il va de soi que la table précédemment décrite est symétrique par rapport à son axe longitudinal et que la disposition illustrée pour moitié à la figure 3 en référence à une seule série de barres ou longerons latéraux se retrouve de façon identique de l'autre côté. Des traverses de rigidification telles que la traverse représentée 22 relient entre eux les longerons ou barres opposés.

Les opérations de déploiement de la table s'effectuent de la façon suivante.

Dans la position rentrée de la figure 1, les rouleaux supérieurs 5 qui affleurent à la partie supérieure sont ceux portés par le premier élément 4. Les barres 8 de l'élément intermédiaire 7 se trouvent en face des longerons 6 du premier, mais les chaînes 17 et les rouleaux qu'elles supportent se trouvent dans les goulottes 14 et la zone de stockage 15.

Les chaînes 17 et 10 étant reliées bout à bout, les chaînes 10 portant les rouleaux 5 se trouvent stockées dans le prolongement c'est-à-dire dans la courbe 20 et une zone terminale de stockage sous le plan supérieur de la table.

L'utilisateur tire alors sur le premier élément 4 pour le sortir de la table. L'élément intermédiaire 7 étant immobilisé par un système de blocage qui sera expliqué plus loin, les longerons 6 vont rouler grâce à leurs rouleaux 21, à l'intérieur de la barre inférieure 8b. Le premier élément équipé de ses rouleaux se déploie donc progressivement à l'extérieur de la table, et il entraîne avec lui les chaînes 17 du fait que les bouts desdites chaînes sont solidaires des longerons. L'entraînement des chaînes 17 fait sortir les rouleaux qu'elles portent et ces derniers viennent en continuité avec les premiers et au même niveau, se placer dans l'élément intermédiaire, du fait du déplacement de la chaîne 17, grâce à ses rouleaux 18, dans les barres 8a. Arrivé en bout de course, le premier élément déclenche à l'aide d'un mécanisme qui sera également décrit plus loin, le déverrouillage des barres 8 par rapport à la table. Si l'utilisateur continue à tirer sur le premier élément, les barres 8 vont se déplacer également dans les barres 9b grâce aux rouleaux 19 ; l'élément intermédiaire avec ses rouleaux se déploie à son tour. Puisqu'enfin lesdites barres 8 sont rattachées aux chaînes 10, le déplacement progressif de l'élément intermédiaire va sortir lesdites chaînes 10 et leurs rouleaux de la zone de stockage et les chaînes vont s'engager dans les barres supérieures 9a où elles roulent grâce aux galets 11. Les derniers rouleaux stockés sous le plan de travail de la table vont donc se placer en partie haute et d'un bout à l'autre de la table déployée il y a une parfaite continuité des rouleaux à la fois en plan puisqu'il n'y a aucun décrochement, mais aussi en intervalles entre rouleaux. On dispose ainsi d'une table à rouleaux dont le surplomb est près de trois fois la longueur de celle de la table fixe.

Lors de l'opération inverse de repoussage du premier élément par l'utilisateur, un système de butée décrit plus loin interdit la rentrée de ce premier élément 4 à l'intérieur de l'élément intermédiaire 7 tant que celui-ci n'est pas lui-même repoussé sur la table. Le repoussage du premier élément entraîne donc celui de l'élément intermédiaire dont l'extrémité des longerons 6 repousse les chaînes 10 à l'intérieur des goulottes et de la zone de stockage. Dès que l'élément intermédiaire est en place, les longerons 6 du premier élément sont libérés et peuvent rentrer dans l'élément intermédiaire. Au fur et à mesure, les rouleaux fixés aux deux chaînes s'éclipsent dans la table.

Bien entendu sont prévus des dispositifs de blocage du type à patins de freinage pouvant être appliqués sur les barres et longerons mobiles, pour immobiliser les supports de rouleaux dans la position voulue plus ou moins déployée, et éviter leur repli ou leur déploiement intempestif notamment quand la table est en position inclinée.

En faisant référence aux figures 6, 7 et 8, on décrit maintenant le système de blocage de l'élément intermédiaire 7 lors de la première phase de sortie du premier élément 4. Le blocage est assuré par un profilé 23 qui est une petite plaque découpée en forme de V très ouvert dont la partie inférieure forme une dent 24 comme le montre la figure 6. Il dispose en son centre d'un orifice 25 permettant le passage d'un axe de pivotement 26 boulonné au dessous d'une extrémité d'une barre inférieure 8b de l'élément intermédiaire 7 (figure 7). Une petite échancrure longitudinale est prévue dans la base de la barre 8b pour que l'une ou l'autre des extrémités du basculeur puisse déborder à l'intérieur de ladite barre. Quand le basculeur est dans la position représentée à la figure 6 c'est la partie droite qui déborde dans la barre. Dans ce cas la dent 24 vient s'accrocher sur une traverse fixe 27 solidaire du bâti 1. l'élément intermédiaire 7 est donc bloqué ce qui permet de déployer le premier élément 4 sans entraîner ledit élément intermédiaire.

On voit à la figure 8 que son déblocage est assuré en fin de course du premier élément 4 quand un rouleau inférieur 21 mobile avec le longeron 6 aura atteint le basculeur 23 et l'aura fait pivoter autour de son axe. De ce fait, la dent 24 échappe à la traverse 27 et le basculeur est déverrouillé. L'élément intermédiaire 7 peut alors se déployer, étant entraîné par les rouleaux de réaction du premier élément qui viennent en butée contre des galets latéraux de guidage 28 visibles à la figure 8.

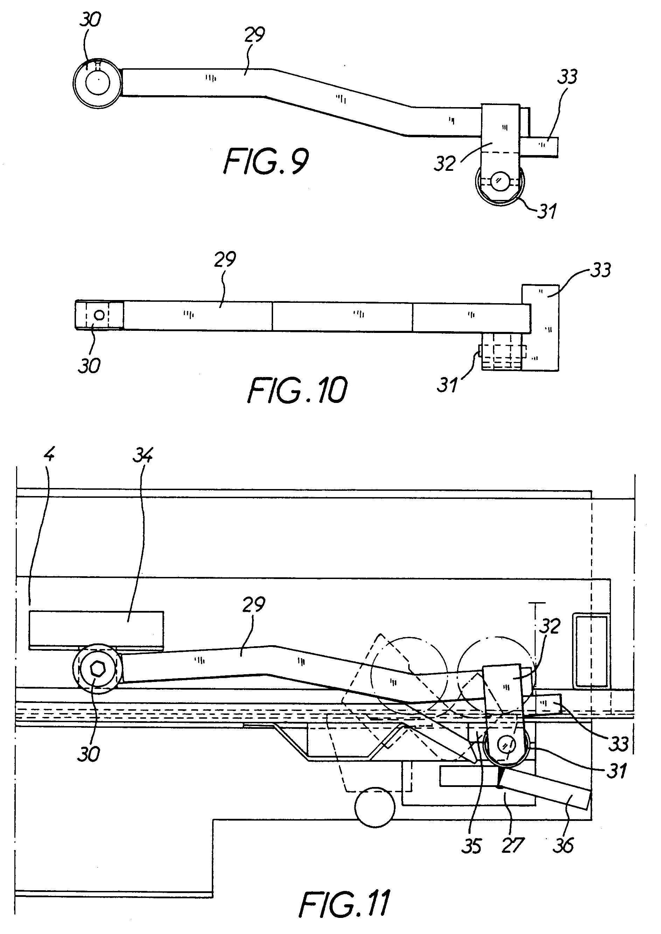

Le système de butée interdisant la rentrée du premier élément 4 à l'intérieur de l'élément intermédiaire 7 sera décrit ci-après en référence aux figures 7, 9, 10 et 11. Le système met en oeuvre un poussoir escamotable 29 dont une extrémité est fixée par un tourillon 30 à une pièce centrale 34 solidaire du premier élément 4 à se déployer L'extrémité opposée porte un galet de roulement 31 monté en bout d'une potence verticale 32. Sur la potence est fixée une butée transversale 33.

Quand la table télescopique est complètement déployée ledit galet 31 est en position basse comme représenté en pointillé à la figure 7. La butée transversale 33 du poussoir escamotable se trouve donc en avant d'un fer plat 35 solidaire de l'élément intermédiaire 7. L'action de repousser le premier élément 4 va -grâce à cette butée et le fer plat, repousser aussi l'élément intermédiaire. Quand ce dernier atteint sa fin de course sur la table fixe, le galet 31 gravit une rampe 36 située au niveau de la traverse 27. Le poussoir escamotable bascule alors vers le haut et la butée 33 échappe au fer plat 35 de l'élément intermédiaire. Le premier élément 4 peut donc à son tour rentrer dans l'élément intermédiaire.

La table télescopique précédemment décrite présente l'avantage d'avoir tous ses rouleaux alignés dans un même plan ce qui permet, une fois déployée, un flux de manutention dans les deux sens permettant de charger ou décharger un camion, et cela sans motorisation.

## Revendications

1. Table télescopique à rouleaux de manutention comportant un bâti-support fixe (1) supporté par des pieds (2), un élément intermédiaire déployable (7) dont les longerons (8) se déplacent de façon télescopique dans le bâti fixe et un premier élément déployable (4) dont les longerons (6) sur lesquels sont fixés directement des rouleaux (5), se déplacent de façon télescopique dans l'élément intermédiaire déployable, ledit premier élément déployable entraînant dans son mouvement les rouleaux de l'élément précédent qui se place sur la table dans un même plan horizontal, lesdits rouleaux étant extraits d'une zone de stockage (15) disposée sous la table fixe, grâce à au moins une chaîne d'entraînement (10, 17), caractérisé en ce que l'élément intermédiaire déployable (7) est déplaçable entre deux barres (9) en forme de U du bâti-support (1) qui sont formées de deux parties superposées (9a, 9b) dont la barre supérieure (9a) renferme une première chaîne d'entraînement (10) dont les axes (13) des galets de guidage (11) portent des rouleaux (5), en ce que le premier élément déployable (4) est déplaçable entre deux barres (8) en forme de U de l'élément intermédiaire qui sont formées de deux parties superposées (8a, 8b) dont la partie supérieure (8a) renferme une autre chaîne d'entraînement (17) dont les axes des galets de guidage (18) portent des rouleaux (5) et en ce que les éléments déployables sont équipés d'un système de blocage (23, 27) de la sortie d'un élément déployable et d'un système de butée (29, 33, 35) de la rentrée d'un élément déployable.

2. Table télescopique selon la revendication 1, caractérisée en ce que son bâti-support (1) est supporté par des pieds (2) dont chacun est constitué de tubes emboîtables autorisant la levée de tout ou partie du châssis de la table.

3. Table télescopique selon la revendication 1, caractérisée en ce que le bâti-support fixe (1) est pourvu sur ses deux faces latérales internes, de goulottes (14) venant dans le prolongement des barres (9) et aboutissant à une zone de stockage (15) pour la chaîne (10) et les rouleaux qu'elle porte.

4. Table télescopique selon la revendication 1, caractérisée en ce que le dernier maillon intérieur (10b) de la chaîne (10) est relié au premier maillon extérieur (17a) de la chaîne (17) par une entretoise (16), ledit premier maillon étant fixé rigidement à l'extrémité du longeron.

5. Table télescopique selon la revendication 1, caractérisée en ce que des rouleaux de réaction (19) sont fixés de place en place extérieurement à la barre inférieure (8b) de l'élément intermédiaire (7) et se déplacent à l'intérieur de la barre inférieure (9b) du bâti-support (1).

6. Table télescopique selon la revendication 1, caractérisée en ce que des rouleaux de réaction (21) sont fixés de place en place extérieurement au longeron (6) du premier élément (4) et se déplacent à l'intérieur de la barre inférieure (8b) de l'élément intermédiaire (7).

7. Table télescopique selon la revendication 1, caractérisée en ce que le système de blocage de l'élément intermédiaire (7) lors de la première phase de sortie du premier élément (4) est constitué d'un basculeur profilé (23) porté par l'extrémité d'une barre inférieure (8b) de l'élément intermédiaire (7), qui coopère avec une traverse fixe (27) solidaire du bâti-support (1).

8. Table télescopique selon la revendication 7, caractérisée en ce que le basculeur (23) est une plaque découpée en forme de V dont la partie inférieure forme une dent (24), plaque qui pivote sur un axe (26) boulonné sur l'extrémité de la barre inférieure (8b), et en ce que ledit basculeur déborde dans ladite barre et peut être basculé par un rouleau de réaction (21) pour être déverrouillé de la traverse (27).

9. Table télescopique selon la revendication 1, caractérisée en ce que le système de butée interdisant la rentrée du premier élément (4) à l'intérieur de l'élément intermédiaire (7) est constitué d'un poussoir escamotable (29) porté par ledit premier élément, qui coopère avec un fer plat (35) solidaire de l'élément intermédiaire.

10. Table télescopique selon la revendication 9, caractérisée en ce qu'une extrémité du poussoir escamotable (29) porte un galet de roulement (31) et une butée transversale (33).

11. Table télescopique selon les revendications 7 et 9, caractérisée en ce que la traverse (27) solidaire du bâti-support (1) porte une rampe (36) servant au basculement de poussoir escamotable (29) grâce à son galet de roulement (31).

## Claims

1. Telescopic table with roller conveyor comprising a fixed support frame (1) supported by feet (2), an intermediate deployable member (7) of which the side frame members (8) are displaceable in telescopic fashion in the fixed framework and a primary deployable member (4) on the side frame members (6) of which are directly fixed rollers (5) and which can move in telescopic fashion in the intermediate deployable member, the said primary deployable member entraining during its movement the rollers of the preceding member which locate themselves on the table in an even horizontal plane, the said rollers being extracted from a storage zone (15) located under the fixed table by means of at least one entrainment chain (10, 17), characterised in that the intermediate deployable member (7) is displaceable between two U-shaped bars (9) of the support frame (1) which are formed by two superimposed portions (9a, 9b) of which the upper bar (9a) encloses a first entrainment chain (10) of which the axles (13) of the guide rollers (11) carry the rollers (5), in that the primary deployable member (4) can be displaced between two U-shaped bars (8) of the intermediate element which are formed two superimposed parts (8a, 8b) of which the upper part (8a) encloses another entrainment chain (17), the axes of the guide rollers of which (18) carry rollers (5) and in that the deployable elements are provided with a locking system (23, 27) against the exit of a deployable element and with an abutment system (29, 33, 35) against re-entry of a deployable element.

2. Telescopic table according to Claim 1, characterized in that its support frame (1) is supported by feet (2), each of which is formed of tubes fitting together permitting the raising of all or part of the chassis of the table.

3. Telescopic table according to Claim 1, characterised in that the fixed support frame (1) is provided on its two lateral internal faces with runners (14) emerging from the projection of the bars (9) and abutting on a storage zone (15) for the chain (10) and the rollers which it carries.

4. Telescopic table according to Claim 1, characterised in that the final interior link (10b) of the chain (10) is connected to the first exterior link (17a) of the chain (17) by a bridge member (16), the said first link being rigidly fixed to the end of the side frame member.

5. Telescopic table according to Claim 1, characterised in that reaction rollers (19) are fixed here and there on the exterior of the lower bar (8b) of the intermediate member (7) and are displaced in the interior of the lower bar (9b) of the support framework (1).

6. Telescopic table according to Claim 1, characterised in that reaction rollers (21) are fixed here and there on the exterior to the side frame member (6) of the first member (4) and which can be displaced in the interior of the lower bar (8b) of the intermediate member (7).

7. Telescopic table according to Claim 1, characterised in that the locking system for the intermediate member (7) during the first emergent phase of the first member (4) is formed by a shaped rocker (23) carried by the end of a lower bar (8b) of the intermediate member (7) which cooperates with a fixed cross-member (27) fast to the support frame (1).

8. Telescopic table according to Claim 7, characterised in that the rocker (23) is a plate cut out in a V-shape, the lower part of which forms a tooth (24), which plate pivots on an axle (26) bolted on the end of the lower bar (8b) and in that the said rocker projects into the said bar and can be rocked by a reaction roller (21) in order to be unlocked from the cross-member (27).

9. Telescopic table according to Claim 1, characterised in that the abutment system preventing the re-entry of the first member (4) into the interior of the intermediate member (7) is formed by a retractable tappet (29) carried by the said first element which cooperates with a flat tab (35) fixed to the intermediate element.

10. Telescopic table according to Claim 9, characterised in that one end of the retractable tappet (29) carries a turning roller (31) and a transverse abutment (33).

11. Telescopic table according to Claims 7 and 9, characterised in that the cross-member (27) fixed to the support frame (1) carries a ramp (36) serving to rock the retractable tappet (29) because of its turning roller (31).

## Patentansprüche

1. Teleskopierbarer Tisch mit Rollenförderer, der ein festes, von Füßen (2) getragenes Trägergestell (1) umfaßt, ein ausfahrbares Zwischenelement (7), bei dem sich die Längsträger (8) in teleskopierbarer Art und Weise in das feste Gestell verschieben lassen, und ein erstes ausfahrbares Element (4), dessen Längsträger (6), an denen Rollen (5) direkt befestigt sind, sich in teleskopierbarer Art und Weise in das ausfahrbare Zwischenelement verschieben lassen, wobei das erste ausfahrbare Element während seiner Bewegung die Rollen des vorgeschalteten Elementes mitnimmt, die sich auf dem Tisch in einer gleichen horizontalen Ebene befinden, wobei die besagten Rollen mittels zumindest einer Antriebskette (10, 17) aus einem Aufbewahrungsbereich (15) herausgezogen sind, welcher unter dem festen Tisch angeordnet ist,
dadurch gekennzeichnet,
daß das ausfahrbare Zwischenelement (7) zwischen zwei U-förmigen Stäben (9) des Trägergestells (1) verschiebbar ist, welche aus zwei übereinander angeordneten Teilen (9a, 9b) gebildet sind, wobei der obere Stab (9a) eine erste Antriebskette (10) einschließt, bei der die Achsen (13) der Führungswalzen (11) Rollen (5) tragen, daß das erste ausfahrbare Element (4) zwischen zwei U-förmigen Stäben (8) des Zwischenelementes verschiebbar ist, welche aus zwei übereinander angeordneten Teilen (8a, 8b) bestehen, wobei der obere Teil (8a) eine weitere Antriebskette (17) einschließt, bei der die Achsen der Führungswalzen (18) Rollen (5) tragen, und daß die ausfahrbaren Elemente mit einem System (23, 27) zum Blockieren des Ausfahrens eines ausfahrbaren Elementes und mit einem Anschlagsystem (29, 33, 35) für das Einfahren eines ausfahrbaren Elementes ausgestattet sind.

2. Teleskopierbarer Tisch nach Anspruch 1,
dadurch gekennzeichnet,
daß sein Trägergestell von Füßen (2) getragen ist, von denen jeder aus ineinanderschiebbaren Rohren gebildet ist, die das Anheben des kompletten oder eines Teils des Rahmens des Tisches zulassen.

3. Teleskopierbarer Tisch nach Anspruch 1,
dadurch gekennzeichnet,
daß das feste Trägergestell (1) an seinen beiden inneren seitlichen Flächen mit Rinnen (14) versehen ist, die in der Verlängerung der Stäbe (9) verlaufen und in eine Aufbewahrungszone (15) für die Kette (10) und die von ihr getragenen Rollen hineinführen.

4. Teleskopierbarer Tisch nach Anspruch 1,
dadurch gekennzeichnet,
daß das letzte innere Kettenglied (10b) der Kette (10) mit dem ersten äußeren Kettenglied (17a) der Kette (17) verbunden ist durch einen Querriegel (16), wobei das erste Kettenglied starr am Ende des Längsträgers befestigt ist.

5. Teleskopierbarer Tisch nach Anspruch 1,
dadurch gekennzeichnet,
daß Reaktionsrollen (19) in Abständen außen am unteren Stab (8b) des Zwischenelementes (7) festgelegt sind und sich in das Innere des unteren Stabes (9b) des Trägergestells (1) verschieben.

6. Teleskopierbarer Tisch nach Anspruch 1,
dadurch gekennzeichnet,
daß Reaktionsrollen (21) in Abständen außen am Längsträger (6) des ersten Elementes (4) befestigt sind und sich in das Innere des unteren Stabes (8b) des Zwischenelementes (7) verschieben.

7. Teleskopierbarer Tisch nach Anspruch 1,
dadurch gekennzeichnet,
daß das Blockiersystem des Zwischenelementes (7) während der ersten Phase des Ausfahrens des ersten Elements (4) aus einem profilierten Kippelement (23) gebildet ist, das vom Ende eines unteren Stabes (8b) des Zwischenelementes (7) getragen wird, und das mit einer mit dem Trägergestell (1) verbundenen festen Traverse (27) zusammenwirkt.

8. Teleskopierbarer Tisch nach Anspruch 7,
dadurch gekennzeichnet,
daß das Kippelement (23) eine abgeschnittene V-förmige Platte ist, deren unterer Bereich einen Zahn (24) bildet, wobei die Platte um eine mit Bolzen am Ende des unteren Stabes (8b) befestigte Achse (26) schwenkbar ist, und daß das Kippelement in den Stab vorsteht und von einer Reaktionsrolle (21) gekippt werden kann, um von der Traverse (27) entriegelt zu werden.

9. Teleskopierbarer Tisch nach Anspruch 1,
dadurch gekennzeichnet,
daß das Anschlagsystem, das das Zurücklaufen des ersten Elementes (4) in das Innere des Zwischenelementes (7) unterbindet, durch einen versenkbaren Mitnehmer (29) gebildet ist, der von dem ersten Element getragen wird, wobei er mit einem flachen, mit dem Zwischenelement verbundenen Eisen (35) zusammenwirkt.

10. Teleskopierbarer Tisch nach Anspruch 9,
dadurch gekennzeichnet,
daß ein Ende des versenkbaren Mitnehmers (29) eine Laufrolle (31) und einen Queranschlag (33) trägt.

11. Teleskopierbarer Tisch nach Anspruch 7 und 9,
dadurch gekennzeichnet,
daß die mit dem Trägergestell (1) verbundene Traverse (27) eine Rampe (36) trägt, die zum Kippen des versenkbaren Mitnehmers (29) mit Hilfe seiner Laufrolle (31) dient.
